# FASCICULE DE BREVET EUROPEEN

(11) **EP 3 794 722 B1**
(45) Date de publication et mention de la délivrance du brevet: **29.06.2022**
(21) Numéro de dépôt: 19721314.3
(22) Date de dépôt: 07.05.2019
(51) Int. Cl.: H02P 6/08

(54) **ENSEMBLE MECATRONIQUE POUR L'ENTRAINEMENT OU LE POSITIONNEMENT D'UN ORGANE EXTERIEUR**
MECHATRONISCHE ANORDNUNG ZUR ANSTEUERUNG ODER POSITIONIERUNG EINES ÄUSSEREN ELEMENTES
MECHATRONIC ASSEMBLY FOR DRIVING OR POSITIONING AN EXTERNAL MEMBER

(30) Priorité: 17.05.2018 FR 1854112
(43) Date de publication de la demande: 24.03.2021
(73) Titulaire: Sonceboz Automotive SA, 2605 Sonceboz (CH)
(72) Inventeur: AUDOUY, Christophe, 2605 SONCEBOZ (CH); WATRIN, Mathieu, 2605 SONCEBOZ (CH)
(74) Mandataire: IP Trust
(86) Numéro de dépôt international: PCT/EP2019/061731
(87) Numéro de publication internationale: WO 2019/219456

(56) Documents cités:
- EP-A1- 2 701 300
- EP-A2- 2 932 088
- US-A1- 2005 179 414
- US-B1- 9 774 279
- US-B1- 9 774 279

## Description

### Domaine de l'invention

La présente invention concerne le domaine de la mécatronique et plus spécialement des actionneurs comportant un moteur sans balais. Elle propose de pouvoir remplacer, dans une application donnée, un moteur avec balai par un moteur sans balai, sans modifier l'architecture de commande et en améliorant les solutions actuelles.

Un moteur avec balais fonctionnant à vitesse fixe ne nécessite qu'une tension continue et un commutateur marche/arrêt. En faisant varier la tension, on modifie la vitesse sur une large plage. Pour les applications automobiles utilisant de tels moteurs, il est connu d'utiliser une unité de commande électronique (ECU) présentant une architecture telle qu'un pont dit « en H » constitué par deux paires de transistors commandant le passage du courant dans un sens ou dans l'autre, ce qui permet d'obtenir un courant bipolaire (négatif et positif) et donc un mouvement bidirectionnel.

Pour contrôler la vitesse de ces moteurs, on utilise de manière connue et usuelle un signal modulé par largeur d'impulsion (MLI ou pulse-width modulation, PWM) qui sert à générer une tension moyenne avec une modulation par un signal de forme rectangulaire prenant des valeurs binaires (généralement par un passage du 0 volt à la tension de batterie, typiquement 12V). Le bobinage du moteur agit comme un filtre passe-bas par le jeu de sa résistance et de son inductance, ce qui permet à une forme d'onde PWM haute fréquence de générer un courant quasiment constant dans ce bobinage. Pour régler la vitesse plus précisément, il est possible d'ajouter un capteur de vitesse, par exemple un capteur à effet Hall ou un codeur optique, pour former un système de commande en boucle fermée.

Lorsque l'on souhaite améliorer notamment la durée de vie du moteur et les performances obtenues, le passage à un moteur sans balai est privilégié. Il est alors souhaitable de pouvoir l'alimenter en énergie et en commande avec cette simple architecture ECU existante.

### Etat de la technique

On connaît dans l'état de la technique le brevet EP2932088 qui permet de remplacer *un pour un* (c'est-à-dire sans rien changer d'autre) un moteur avec balai par un moteur sans balai, c'est-à-dire ici sans modifier l'architecture ECU existante. La solution présentée propose de piloter les transistors directement par le signal des sondes de détection du rotor par le biais d'un circuit électronique simple sans microcontrôleur.

On connaît aussi le brevet américain US9774279 décrivant un système pour commander le mouvement d'un actionneur comprenant une source d'alimentation d'entrée qui fournit un signal PWM, un circuit de pilotage moteur qui reçoit le signal PWM et fournit un signal de commande triphasé synthétisé, un moteur à courant continu sans balais qui reçoit le signal de commande et qui fonctionne en réponse au signal de commande reçu pour repositionner l'actionneur, et un contrôleur qui reçoit le signal PWM. Le contrôleur comprend un module de détection d'amplitude qui détecte l'amplitude du signal PWM, et un module de détection de direction qui détecte la polarité du signal PWM. Le document US 2005/179414 A1 décrit un microcontrôleur qui génère un signal de commande transmis à l'étage de puissance. Toutefois, ce document ne prévoit pas de liaison bifilaire ni d'utiliser le signal modulé pour délivrer un signal d'alimentation continu au microcontrôleur et à l'étage de puissance.

### Inconvénient de l'art antérieur

La solution exposée dans le brevet EP2932088 n'est pas toujours satisfaisante lorsque l'on souhaite obtenir des performances optimales du moteur. En effet l'architecture simple, sans microcontrôleur, ainsi que les tables de logique simple qui sont décrites, induisent un fonctionnement du moteur avec un courant et donc un couple peu constant : le rendement du moteur en est donc affecté. De même, lorsque l'on souhaite ajouter des fonctions de diagnostique ou d'arrêt du moteur lorsque des conditions critiques sont atteintes (température élevée, butée mécanique) ce type de commande ne peut les réaliser. De même encore, lorsque l'on souhaite piloter le moteur selon un signal PWM ayant des caractéristiques différentes (en fréquence par exemple), cette architecture électronique ne le permet pas.

La solution exposée dans le brevet US9774279 permet a priori une amélioration par l'ajout d'un microcontrôleur mais la description qui en est faite est vague et n'est surtout pas satisfaisante dans sa solution exposée. En effet, le moteur sans balais est commandé en fonction de l'amplitude du signal PWM généré par une ECU. Or, l'amplitude du signal PWM est soumise à des perturbations telles que la variation de la tension d'alimentation fournie par la batterie, des impulsions transitoires de tension, ainsi que des perturbations électromagnétiques provenant de machines électriques ou de composants situés au voisinage des fils de liaison ou des circuits électroniques. Ces perturbations faussent alors le signal détecté par le circuit électronique de commande et le moteur à courant continu sans balais (BLDC) n'est pas commandé de manière satisfaisante. Pour pallier à ces inconvénients, la solution de l'art antérieur propose un traitement numérique de reconstruction d'un signal rectangulaire, opération consommant des ressources de calcul élevées et entraînant un surcroit de consommation électrique. Il n'est, de plus, pas clair dans ce brevet si le signal alimentant le moteur est un signal bifilaire ou non.

### Solution apportée par l'invention

La présente invention a pour objet de proposer une solution aux problèmes décrits ci-dessus en proposant un actionneur à circuit électronique intégré pouvant être mis en lieu et place d'un moteur avec balai, tout en étant insensible aux variations d'amplitude de tension et en permettant d'optimiser le fonctionnement du moteur électrique.

Plus particulièrement, l'invention concerne un actionneur comportant un moteur sans balais polyphasé présentant une liaison bifilaire pour recevoir un signal d'alimentation modulé à rapport cyclique ou à fréquence modulé, fourni par une unité de contrôle moteur, ledit actionneur comportant en outre un circuit électronique comprenant un microcontrôleur et un étage de puissance délivrant les signaux d'alimentation des bobines dudit moteur sans balais, et un étage d'alimentation comportant un redresseur et/ou un filtrage dudit signal modulé pour délivrer un signal d'alimentation continu du circuit électronique ledit circuit électronique comportant :
- un étage externe ou intégré au microcontrôleur de décodage par détermination temporelle des fronts montants et descendants dudit signal modulé pour fournir :
   - une consigne de direction de rotation par analyse du signal sur lesdits deux fils, et/ou
   - une consigne de position cible du rotor et/ou
   - une consigne d'une séquence de mouvement préenregistré, et/ou
   - une consigne de vitesse,
ledit microcontrôleur commandant le signal d'alimentation de chacune des phases en fonction desdites consignes et dudit signal d'alimentation, les sorties dudit étage de puissance alimentant les bobines du moteur sans balais.

Préférentiellement, ledit étage de puissance comprend 2N transistors à effet de champ MOSFET, N désignant le nombre de phases dudit moteur sans balais.

Dans un mode de réalisation préféré, la détection des fronts montants/descendants est réalisée par détermination du franchissement par le signal d'entrée d'une valeur-seuil correspondant à un niveau intermédiaire entre le niveau haut et le niveau bas du signal modulé.

Par exemple, la détection des fronts montants/descendants est réalisée par détermination du franchissement croissant par le signal d'entrée d'une première valeur-seuil correspondant à un niveau compris entre 20 et 45% de l'amplitude nominale, et du franchissement décroissant par le signal d'entrée d'une deuxième valeur-seuil correspondant à un niveau compris entre 55 et 80% de l'amplitude nominale.

De manière optionnelle mais non limitative, le moteur entraîne un capteur de position dont la sortie est raccordée à l'unité de commande électronique ou il est possible que le microcontrôleur simule un signal de position transmis à l'unité de commande électronique.

Dans un mode de réalisation alternatif, le microcontrôleur effectue une mesure du rapport cyclique du signal modulé pour interpréter la commande de position en fonction dudit rapport cyclique.

Dans un autre mode de réalisation alternatif, le microcontrôleur effectue une mesure de la fréquence du signal modulé pour interpréter la commande de position en fonction de ladite fréquence.

### Description détaillée d'un exemple non limitatif de l'invention

La présente invention sera mieux comprise à la lecture de la description détaillée d'un exemple non limitatif de l'invention qui suit, se référant aux dessins annexés où :
- la figure 1 représente un schéma de principe d'un premier mode de réalisation d'un actionneur selon l'invention,
- la figure 2 représente un schéma de principe d'un deuxième mode de réalisation d'un actionneur selon l'invention,
- la figure 3 représente un schéma de principe d'un troisième mode de réalisation d'un actionneur selon l'invention,
- la figure 4 représente un schéma de principe d'un troisième mode de réalisation d'un actionneur selon l'invention.

### Description d'un exemple de réalisation avec capteur de position

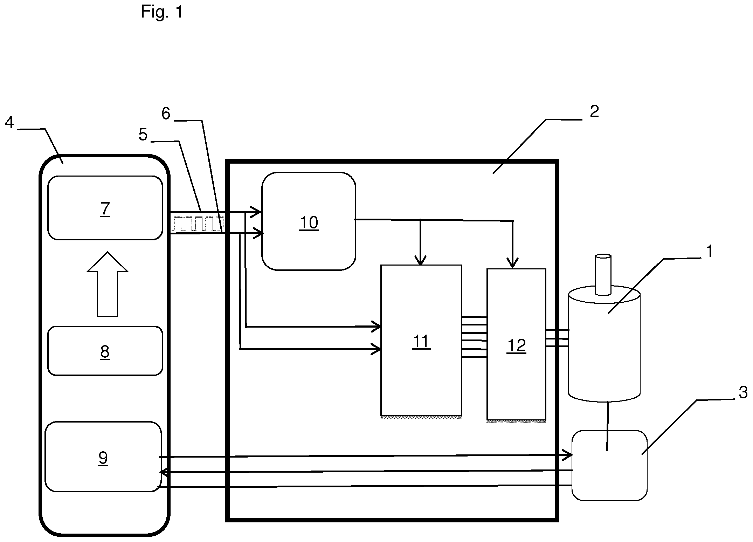

La figure 1 représente un exemple de réalisation d'actionneur comportant un moteur sans balais (1) associé à un circuit électronique (2) et à un capteur de position absolu (3), ce dernier étant optionnel pour la mise en œuvre de l'invention.

Cet actionneur reçoit les signaux d'une unité de commande électronique ECU (4) composée d'un calculateur électronique et d'un logiciel embarqué qui réalise un asservissement d'un moteur par des signaux modulés en PWM, transmis sur deux fils (5, 6).

L'unité de commande électronique est habituellement destinée à la commande d'un moteur avec balai, associé à un capteur de retour de position pour assurer un asservissement en position. Elle comporte habituellement un pont en H (7) servant à contrôler la polarité du signal de sortie sur les bornes (5, 6), ce signal comprenant l'information de puissance, de couple ou vitesse et de direction. Le pont en H (7) permet de réaliser 2 fonctions qui sont d'inverser le sens de rotation du moteur en inversant le courant aux bornes du moteur et la variation de la vitesse du moteur en modulant la tension aux bornes du moteur.

Le pont en H (7) reçoit les informations d'un régulateur PID (8), assurant l'asservissement en boucle fermée en fonction des données provenant d'un circuit (9) traitant les informations provenant du capteur (3). La régulation en boucle fermée à partir de l'information du capteur n'est pas impérative dans la présente invention et n'est donnée ici qu'à titre informatif. Il est précisé aussi que l'invention ne porte pas sur l'unité de commande électronique (4).

Le circuit électronique (2) comporte une entrée avec deux bornes (5, 6) reliées à l'unité de contrôle électronique (4) par une liaison bifilaire, transportant un courant électrique de puissance modulé en largeur d'impulsions. Le circuit électronique (2) ne comporte pas de borne pour une alimentation électrique de puissance additionnelle, de sorte que le signal bifilaire comporte les informations de direction (c'est-à-dire le sens dans lequel doit tourner le moteur), de couple ou de vitesse (c'est-à-dire la vitesse à laquelle doit tourner le moteur) et de puissance (le signal transporte la puissance électrique qui est injectée aux phases du moteur).

Ce signal bifilaire (5, 6) est transmis d'une part à un étage d'alimentation (10) et d'une autre part à un microcontrôleur (11). L'étage d'alimentation (10) comporte un redresseur et/ou un filtrage afin de délivrer un signal continu d'alimentation au microcontrôleur (11) et à un étage de puissance (12).

Le microcontrôleur (11) procède à l'analyse des signaux PWM transmis sur deux fils (5, 6) pour détecter les fronts de tension montants et les fronts de tension descendants, et calcule:
o une consigne de direction de rotation par analyse du signal sur lesdits deux fils (5, 6), et/ou
o une consigne de position cible du rotor et/ou
o une consigne d'une séquence de mouvement préenregistrée, et/ou
o une consigne de vitesse.

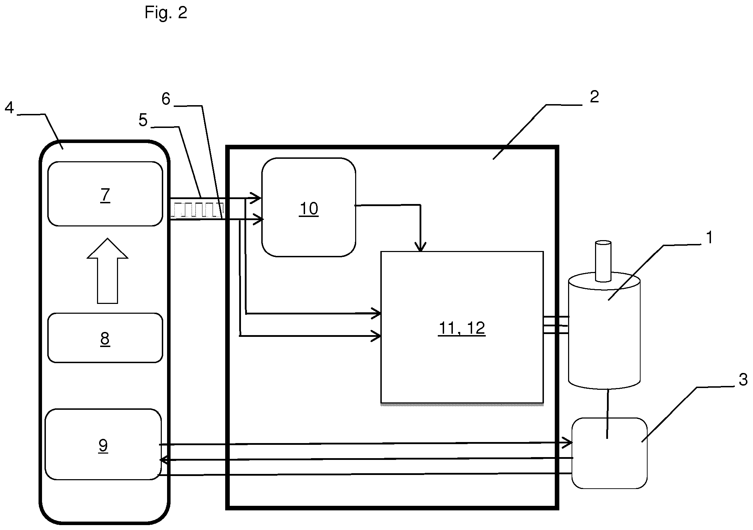

La sortie du microcontrôleur (11) commande l'ouverture et la fermeture de l'étage de puissance (12) en fonction des consignes. L'étage de puissance (12) comporte 2N transistors, N désignant le nombre de phases électriques du moteur (1). Il est précisé que l'étage de puissance (12) peut être intégré au microcontrôleur (11), par exemple lorsque la puissance du moteur est relativement faible (typiquement inférieur à 15 W), comme illustré en figure 2.

### Interprétation de la commande de position

L'actionneur utilise le signal PWM de puissance provenant de l'unité ECU (4) pour alimenter le microprocesseur (11) et l'étage de puissance (12) comme décrit précédemment.

L'étage de puissance (12) délivre le signal d'alimentation redressé et/ou filtré par l'étage d'alimentation (10) à chacune des phases dudit moteur sans balais pour commander différents modes de fonctionnement du moteur.

Selon un premier mode de réalisation, une mesure du rapport cyclique du PWM est réalisée pour interpréter la commande de position. Le rapport cyclique de la modulation en largeur d'impulsion est alors codé pour commander différents modes de fonctionnement, par exemple :
Position de calibration pour un rapport cyclique de 85%,
Position de fermeture pour un rapport cyclique de 90%,
Position d'ouverture pour un rapport cyclique de 95%.

Des positions intermédiaires ou des commandes supplémentaires peuvent être ajoutées en choisissant d'autres rapports cycliques. Dans ce mode de réalisation, donné à titre d'exemple, le microcontrôleur est configuré de manière à interpréter le rapport cyclique du signal PWM.

Selon un deuxième mode de réalisation, une mesure de la fréquence du PWM est réalisée pour interpréter la commande de position. La fréquence de la modulation en largeur d'impulsion est alors codée pour commander différents modes de fonctionnement, par exemple :
Position de fermeture pour un signal PWM de 18Khz,
Position de calibration pour un signal de 20 Khz,
Position d'ouverture pour un signal PWM de 22 Khz.

Des positions intermédiaires ou des commandes supplémentaires peuvent être ajoutées en choisissant d'autres fréquences. Dans ce mode de réalisation, donné à titre d'exemple, le microcontrôleur est configuré de manière à interpréter la fréquence du signal PWM.

L'étage d'alimentation (10) est utilisé pour filtrer et éventuellement redresser le signal (5, 6) afin d'alimenter directement (sans traitement additionnel) l'étage de puissance (12). La fréquence PWM et le rapport cyclique (90% par exemple) sont suffisamment importantes pour permettre un filtrage du signal d'alimentation à l'aide d'un condensateur de faible valeur (typiquement inférieur à 220 *µ*F).

### Traitements additionnels permis par le microcontrôleur

L'actionneur intégrant un microcontrôleur (11), il est possible d'exécuter des fonctionnalités additionnelles commandées par un code informatique, telles que :
- le retour à une position de référence en cas de défaillance,
- l'arrivée à faible vitesse en butée,
- le pilotage de la vitesse de déplacement du rotor selon la position,
- le pilotage du courant selon des conditions de température,
- la minimisation de la consommation,
- l'arrêt de la commande du moteur lors de pics de température ou de courant atteints.

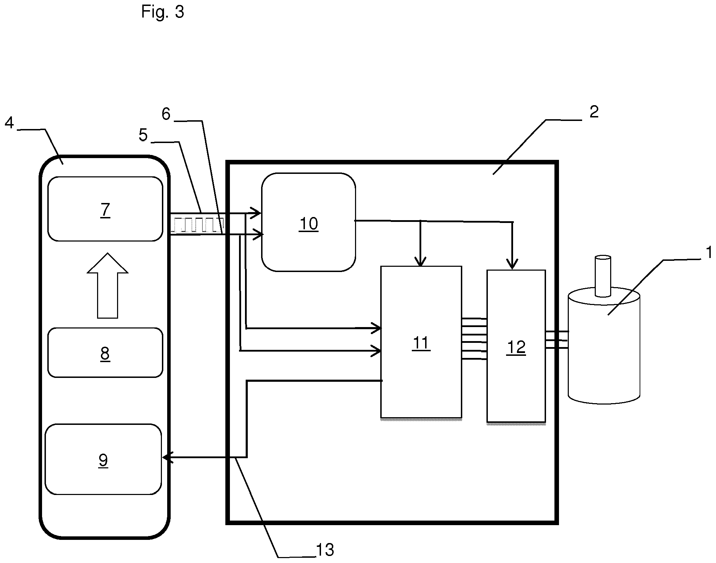

Selon une variante de réalisation, le moteur (1) ne comporte pas de capteur de position (3), comme illustré en figure 3. Dans ce cas, le signal de position est simulé par le microprocesseur (11) et le retour d'information est fait via une ligne dédiée (13).

La simulation du capteur est par exemple réalisée par apprentissage de la position lors d'une recherche de butée dans l'application. La position peut ainsi être connue en comptant les pas moteur réalisés à partir de ces butées.

Le retour d'information est typiquement réalisé par signal de type MLI (PWM) envoyé par le microcontrôleur (11) et qui peut coder le type d'information grâce par exemple à une fréquence de MLI ou à un rapport cyclique particulier. Les différentes informations qui peuvent être envoyées sont alors par exemple: atteinte d'une température donnée, erreur de positionnement, erreur mécanique, consommation anormale de courant,...

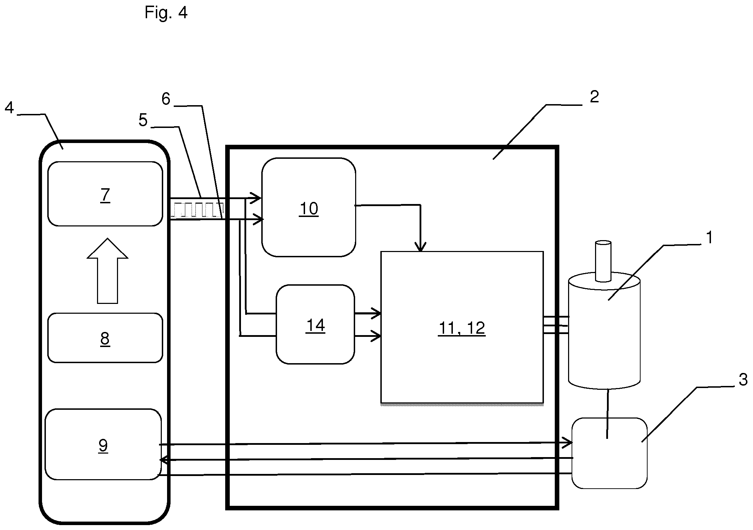

La figure 4 présente un schéma de principe d'un quatrième mode de réalisation d'un actionneur selon l'invention.

Dans ce mode de réalisation, le microcontrôleur (11) comprend l'étage de puissance (12) mais ne comprend pas l'étage de décodage (14) qui est externalisé. Cette variante peut être intéressante lorsque la fonction de décodage, incluant notamment un filtre du signal d'entrée bifilaire, ne peut être prise en charge par le microcontrôleur, par exemple lorsque les niveaux de tension à gérer sont trop importants.

Il est aussi possible d'envisager un mode de réalisation où les différents éléments : étage de décodage (14), microcontrôleur (11) et étage de puissance (12) sont trois éléments distincts les uns des autres.

## Revendications

1. - Actionneur comportant un moteur sans balais (1) polyphasé présentant une liaison bifilaire (5, 6) pour recevoir un signal d'alimentation modulé à rapport cyclique ou à fréquence modulé, fourni par une unité de contrôle moteur (4), ledit actionneur comportant en outre un circuit électronique (2) comprenant un microcontrôleur (11), un étage de puissance (12), et un étage d'alimentation (10) comportant un redresseur et/ou un filtrage dudit signal modulé pour délivrer un signal d'alimentation continu au microcontrôleur (11) et à l'étage de puissance (12) du circuit électronique (2)
ledit circuit électronique (2) comportant :
- un étage de décodage externe ou intégré au microcontrôleur (11) par détermination temporelle des fronts montants et des fronts descendants dudit signal modulé pour fournir :
• une consigne de direction de rotation par analyse du signal modulé sur lesdits deux fils, et/ou
• une consigne de position cible du rotor et/ou
• une consigne d'une séquence de mouvement préenregistré, et/ou
• une consigne de vitesse,
ledit microcontrôleur (11) commandant l'étage de puissance (12) en fonction desdites consignes et dudit signal d'alimentation continu, les sorties dudit étage de puissance (12) alimentant les bobines du moteur sans balais (1).

2. - Actionneur comportant un moteur sans balais polyphasé selon la revendication 1 **caractérisé en ce que** ledit étage de puissance (12) comprend 2N transistors à effet de champ MOSFET, N désignant le nombre de phases dudit moteur sans balais.

3. - Actionneur comportant un moteur sans balais (1) polyphasé selon la revendication 1 **caractérisé en ce que** la détection des fronts montants/descendants est réalisée par détermination du franchissement par le signal d'entrée d'une valeur-seuil correspondant à un niveau intermédiaire entre le niveau haut et le niveau bas du signal modulé.

4. - Actionneur comportant un moteur sans balais polyphasé selon la revendication 1 **caractérisé en ce que** la détection des fronts montants/descendants est réalisée par détermination du franchissement croissant par le signal d'entrée d'une première valeur-seuil correspondant à un niveau compris entre 20 et 45% de l'amplitude nominale, et du franchissement décroissant par le signal d'entrée d'une deuxième valeur-seuil correspondant à un niveau compris entre 55 et 80% de l'amplitude nominale.

5. - Actionneur comportant un moteur sans balais polyphasé selon la revendication 1 **caractérisé en ce que** le moteur (1) entraîne un capteur de position (3) dont la sortie est raccordée à l'unité de commande électronique (4).

6. - Actionneur comportant un moteur sans balais polyphasé selon la revendication 1 **caractérisé en ce que** le microcontrôleur (11) simule un signal de position transmis à l'unité de commande électronique (4).

7. - Actionneur comportant un moteur sans balais polyphasé selon la revendication 1 **caractérisé en ce que** le microcontrôleur effectue une mesure du rapport cyclique du signal modulé pour interpréter la commande de position en fonction dudit rapport cyclique.

8. - Actionneur comportant un moteur sans balais polyphasé selon la revendication 1 **caractérisé en ce que** le microcontrôleur effectue une mesure de la fréquence du signal modulé pour interpréter la commande de position en fonction de ladite fréquence.

## Patentansprüche

1. Aktuator, der einen mehrphasigen bürstenlosen Motor (1) aufweist, der eine Zweidrahtverbindung (5, 6) vorweist, um ein moduliertes Versorgungssignal mit moduliertem Tastverhältnis oder modulierter Frequenz zu empfangen, das durch eine Motorsteuereinheit (4) bereitgestellt wird, wobei der Aktuator ferner eine elektronische Schaltung (2) aufweist, die einen Mikrocontroller (11), eine Leistungsstufe (12) und eine Versorgungsstufe (10) umfasst, die einen Gleichrichter und/oder eine Filterung des modulierten Signals aufweist, um ein Gleichstromversorgungssignal an den Mikrocontroller (11) und an die Leistungsstufe (12) der elektronischen Schaltung (2) abzugeben,
wobei die elektronische Schaltung (2) Folgendes aufweist:
- eine externe oder in den Mikrocontroller (11) integrierte Stufe zum Decodieren durch zeitliche Bestimmung der ansteigenden Flanken und der abfallenden Flanken des modulierten Signals, um Folgendes bereitzustellen:
• einen Drehrichtungssollwert durch Analyse des modulierten Signals auf den zwei Drähten, und/oder
• einen Zielpositionssollwert des Rotors und/oder
• einen Sollwert einer vorher aufgezeichneten Bewegungssequenz und/oder
• einen Geschwindigkeitssollwert,
wobei der Mikrocontroller (11) die Leistungsstufe (12) in Abhängigkeit von den Sollwerten und dem Gleichstromversorgungssignal steuert, wobei die Ausgänge der Leistungsstufe (12) die Spulen des bürstenlosen Motors (1) mit Strom versorgen.

2. Aktuator, der einen mehrphasigen bürstenlosen Motor nach Anspruch 1 aufweist, **dadurch gekennzeichnet, dass** die Leistungsstufe (12) 2N MOSFET-Feldeffekttransistoren umfasst, wobei N die Anzahl der Phasen des bürstenlosen Motors bezeichnet.

3. Aktuator, der einen mehrphasigen bürstenlosen Motor (1) nach Anspruch 1 aufweist, **dadurch gekennzeichnet, dass** das Erfassen der ansteigenden/abfallenden Flanken durch Bestimmen einer Überschreitung eines Schwellenwerts durch das Eingangssignal erfolgt, der einem Zwischenpegel zwischen dem hohen Pegel und dem niedrigen Pegel des modulierten Signals entspricht.

4. Aktuator, der einen mehrphasigen bürstenlosen Motor nach Anspruch 1 aufweist, **dadurch gekennzeichnet, dass** das Erfassen der ansteigenden/abfallenden Flanken durch Bestimmen der zunehmenden Überschreitung eines ersten Schwellenwerts durch das Eingangssignal, der einem Pegel zwischen 20 und 45 % der Nennamplitude entspricht, und der abnehmenden Überschreitung eines zweiten Schwellenwerts durch das Eingangssignal erfolgt, der einem Pegel zwischen 55 und 80 % der Nennamplitude entspricht.

5. Aktuator, der einen mehrphasigen bürstenlosen Motor nach Anspruch 1 aufweist, **dadurch gekennzeichnet, dass** der Motor (1) einen Positionssensor (3) antreibt, dessen Ausgang mit der elektronischen Steuereinheit (4) verbunden ist.

6. Aktuator, der einen mehrphasigen bürstenlosen Motor nach Anspruch 1 aufweist, **dadurch gekennzeichnet, dass** der Mikrocontroller (11) ein Positionssignal simuliert, das an die elektronische Steuereinheit (4) übertragen wird.

7. Aktuator, der einen mehrphasigen bürstenlosen Motor nach Anspruch 1 aufweist, **dadurch gekennzeichnet, dass** der Mikrocontroller eine Messung des Tastverhältnisses des modulierten Signals vornimmt, um die Positionssteuerung in Abhängigkeit des Tastverhältnisses zu interpretieren.

8. Aktuator, der einen mehrphasigen bürstenlosen Motor nach Anspruch 1 aufweist, **dadurch gekennzeichnet, dass** der Mikrocontroller eine Messung der Frequenz des modulierten Signals vornimmt, um die Positionssteuerung in Abhängigkeit der Frequenz zu interpretieren.

## Claims

1. Actuator comprising a polyphase brushless motor (1) having a two-wire connection (5, 6) for receiving a modulated power supply signal having a duty cycle or modulated frequency provided by a motor control unit (4), said actuator further comprising an electronic circuit (2) having a microcontroller (11), a power stage (12), and a power supply stage (10) comprising a rectifier and/or filtering of said modulated signal in order to output a continuous power supply signal to the microcontroller (11) and to the power stage (12) of the electronic circuit (2)
said electronic circuit (2) comprising:
- an external decoding stage or a decoding stage which is integrated in the microcontroller (11), by temporally determining the rising edges and the falling edges of said modulated signal so as to provide:
• a direction of rotation instruction by analyzing the modulated signal on said two wires, and/or
• a target position instruction of the rotor and/or
• a pre-recorded movement sequence instruction, and/or
• a speed instruction,
said microcontroller (11) controlling the power stage (12) according to said instructions and said continuous power supply signal, the outputs of said power stage (12) powering the coils of the brushless motor (1).

2. Actuator comprising a polyphase brushless motor according to claim 1, **characterized in that** said power stage (12) comprises 2N MOSFET field-effect transistors, N designating the number of phases of said brushless motor.

3. Actuator comprising a polyphase brushless motor (1) according to claim 1, **characterized in that** the detection of the rising/falling edges is carried out by determining the crossing by the input signal of a threshold value corresponding to an intermediate level between the high level and the low level of the modulated signal.

4. Actuator comprising a polyphase brushless motor according to claim 1, **characterized in that** the detection of the rising/falling edges is carried out by determining the upward crossing by the input signal of a first threshold value corresponding to a level between 20 and 45% of the nominal amplitude, and by determining the downward crossing by the input signal of a second threshold value corresponding to a level between 55 and 80% of the nominal amplitude.

5. Actuator comprising a polyphase brushless motor according to claim 1, **characterized in that** the motor (1) drives a position sensor (3) of which the output is connected to the electronic control unit (4).

6. Actuator comprising a polyphase brushless motor according to claim 1, **characterized in that** the microcontroller (11) simulates a position signal transmitted to the electronic control unit (4).

7. Actuator comprising a polyphase brushless motor according to claim 1, **characterized in that** the microcontroller measures the duty cycle of the modulated signal in order to interpret the position control according to said duty cycle.

8. Actuator comprising a polyphase brushless motor according to claim 1, **characterized in that** the microcontroller measures the frequency of the modulated signal in order to interpret the position control according to said frequency.
